# FASCICULE DE BREVET EUROPEEN

(11) **EP 2 715 145 B1**
(45) Date de publication et mention de la délivrance du brevet: **31.07.2019**
(21) Numéro de dépôt: 12731050.6
(22) Date de dépôt: 23.05.2012
(51) Int. Cl.: F04D 29/02, F04D 29/32, F04D 29/54

(54) **PROCÉDÉ DE RENFORCEMENT D'UNE PIÈCE MÉCANIQUE**
VERFAHREN ZUR VERSTÄRKUNG EINES MECHANISCHEN BAUTEILS
METHOD FOR REINFORCING A MECHANICAL COMPONENT

(30) Priorité: 27.05.2011 FR 1154676
(43) Date de publication de la demande: 09.04.2014
(73) Titulaire: Safran Aircraft Engines, 75015 Paris (FR)
(72) Inventeur: KLEIN, Gilles, Charles, Casimir, F-77550 Moissy Cramayel Cedex (FR); FRANCHET, Jean-Michel, Patrick, Maurice, F-77550 Moissy Cramayel Cedex (FR); MAGNAUDEIX, Dominique, F-77550 Moissy Cramayel Cedex (FR); LECONTE, Gilbert, Michel, Marin, F-77550 Moissy Cramayel Cedex (FR)
(74) Mandataire: Pichat, Thierry
(86) Numéro de dépôt international: PCT/FR2012/051162
(87) Numéro de publication internationale: WO 2012/164205

(56) Documents cités:
- EP-A1- 1 533 067
- EP-A2- 1 826 363
- GB-A- 1 040 825
- GB-A- 2 039 526
- US-A- 3 419 952
- US-A- 3 762 835
- US-A- 4 919 594
- US-A- 6 050 047

## Description

La présente invention concerne un procédé de renforcement d'un renfort métallique, tel par exemple qu'une pièce de turbomachine, réalisé par assemblage de deux parties, par soudage par diffusion.

Afin de réduire le poids et le coût des aubes de soufflante de turbomachine, celles-ci sont généralement réalisées en matériau composite. Les aubes de soufflante doivent résister à des contraintes et des chocs importants, du fait de leur vitesse de rotation et des impacts de particules ou de corps étrangers susceptibles de pénétrer dans la veine d'air. Pour cela, les aubes en composite sont protégées, au niveau de leurs bords d'attaque et/ou de fuite, par des renforts métalliques collés sur les pales des aubes.

Le document EP 1 574 270-A1, au nom de la Demanderesse, décrit un procédé de réalisation d'un renfort par soudage par diffusion et formage superplastique ou SPF/DB (Super Plasting Forming / Diffusion Bonding), consistant à :
- souder deux tôles l'une à l'autre par soudage par diffusion afin d'obtenir une préforme, une partie des tôles étant recouverte d'un produit anti-diffusant afin d'éviter leur soudage dans des zones déterminées ;
- cambrer et vriller la préforme,
- gonfler la préforme afin qu'elle subisse un formage superplastique,
- découper la préforme afin d'obtenir le renfort.

Ce procédé ne permet pas de contrôler précisément la forme intérieure de la cavité du renfort. En particulier, les zones de jonction des tôles forment des zones de concentration de contraintes et d'amorce de rupture fragilisant le renfort.

Afin d'améliorer la tenue mécanique du renfort, la demande de brevet FR 10/51992, déposée par la Demanderesse et non encore publiée, propose un procédé de réalisation d'un renfort métallique consistant à :
- mettre en forme deux tôles par matriçage pour les rapprocher de la forme définitive du renfort à réaliser,
- positionner les deux tôles de part et d'autre d'un noyau reproduisant les formes internes de l'extrados et de l'intrados du renfort,
- assembler les deux tôles l'une à l'autre autour du noyau de façon étanche et sous vide,
- conformer les tôles sur le noyau par compression isostatique à chaud,
- découper les tôles pour séparer le renfort et libérer le noyau.

La compression isostatique à chaud des tôles permet de conformer les tôles à la forme du noyau et d'obtenir, dans la zone de jonction des tôles, un grand rayon de raccordement et, par conséquent, d'éviter toute zone de concentration de contraintes ou d'amorce de rupture.

Le renfort obtenu comporte une zone massive, destinée à absorber l'énergie des chocs avec des particules ou des corps étrangers, prolongée par deux lèvres destinées à être appliquées respectivement contre l'intrados et l'extrados de l'aube à protéger.

Il existe un besoin d'améliorer la tenue mécanique des renforts afin de protéger les aubes en matériau composite contre les ingestions de corps étrangers lourds, tels que des oiseaux, sans toutefois augmenter de manière importante la masse des renforts.

L'invention a notamment pour but d'apporter une solution simple, efficace et économique à ce problème.

A cet effet, elle propose un procédé de renforcement d'un renfort métallique selon la revendication 1.

L'insertion de moyens de renfort dans le renfort métallique permet d'augmenter ses caractéristiques mécaniques sans augmenter de manière sensible sa masse.

Selon l'invention, les moyens de renfort comportent au moins un faisceau de fibres de renfort entouré d'une gaine de maintien et de protection des fibres.

La gaine permet de maintenir les fibres en position dans l'évidement et éviter qu'elles se cassent lors de l'assemblage des deux parties.

Selon une caractéristique de l'invention, les fibres sont en céramique, par exemple en carbure de silicium.

La gaine et les parties peuvent être métalliques, par exemple en alliage à base de titane, et les fibres peuvent être revêtues d'un matériau métallique, par exemple un alliage à base de titane.

De préférence, le revêtement des fibres, la gaine et les deux parties sont dans un même matériau métallique et les deux parties sont assemblées par soudage par diffusion de manière à ce que, après diffusion, la pièce comporte une matrice métallique homogène dans laquelle sont insérées les fibres de renfort.

Selon une variante de réalisation de l'invention, la gaine est réalisée par tressage de fibres, qui sont de même nature que les fibres de renfort, ou d'une nature différente.

Avant insertion dans l'évidement précité de l'une des parties, les moyens de renfort peuvent être conformés pour épouser la forme de cet évidement.

Ceci facilite la mise en place des moyens de renfort dans l'évidement, avant assemblage des parties.

Afin de faciliter l'insertion du faisceau de fibres dans la gaine, la section du faisceau de fibres peut être inférieure ou égale à 95 % de la section de la gaine.

L'invention concerne en outre un renfort métallique renforcé de turbomachine obtenu par exécution du procédé exposé ci-dessus, caractérisé en ce qu'il comporte des moyens de renfort disposés au coeur de la pièce, dans au moins un évidement des surfaces de jonction des deux parties de la pièce.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'une portion d'un renfort d'un bord d'attaque ou d'un bord de fuite d'une aube de turbomachine, réalisé par assemblage de deux tôles selon l'art antérieur,
- les figures 2 à 4 sont des vues schématiques d'une partie des moyens de renfort selon trois formes de réalisation de l'invention,
- la figure 5 est une vue en perspective d'une portion de l'une des tôles selon l'invention, avant insertion des moyens de renfort,
- la figure 6 est une vue correspondant à la figure 5, après insertion des moyens de renfort,
- la figure 7 est une vue en perspective d'une portion de l'une des tôles, dans laquelle sont insérés les moyens de renfort,
- la figure 8 est une vue schématique d'une tôle dans laquelle sont insérés les moyens de renfort.

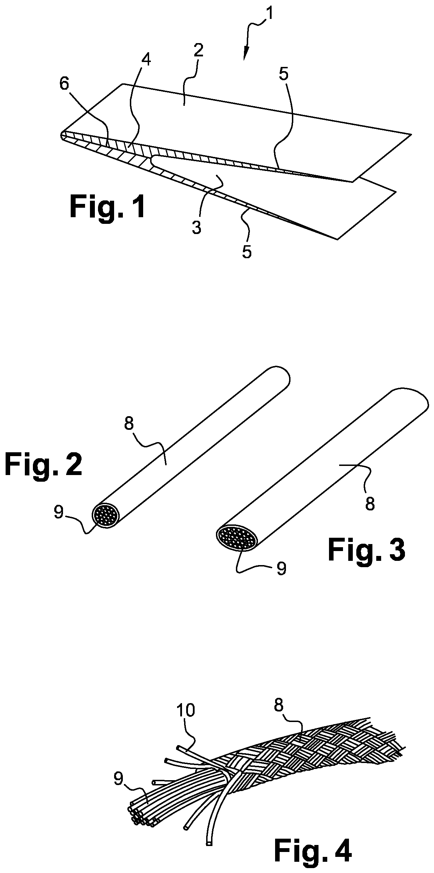

La figure 1 représente une portion d'un renfort métallique 1 de l'art antérieur, réalisé par assemblage de deux tôles 2, 3. Le renfort 1 est destiné à être monté sur le bord d'attaque ou sur le bord de fuite d'une aube composite de turbomachine, telle qu'une aube de soufflante d'un turboréacteur ou d'un turbopropulseur d'avion.

Ce renfort 1 a une forme profilée et présente, à l'avant, une partie massive 4, prolongée par deux lèvres 5 destinées à être appliquées et collées respectivement sur l'intrados et l'extrados d'une aube de soufflante en matériau composite. Les aubes de soufflante en matériau composite sont généralement réalisées par un procédé de type RTM (« Resin Transfer Moulding »).

Chaque tôle du renfort 1 comporte une surface de jonction 6 destinée à être appliquée sur une surface de jonction identique de l'autre tôle lors de leur assemblage. Lorsque les deux tôles 2, 3 sont réalisées dans un même matériau, par exemple en alliage de titane, et sont assemblées l'une à l'autre par soudage par diffusion, le matériau de l'une des tôles peut diffuser dans l'autre tôle, et inversement, de sorte que le plan de jonction des deux tôles peut être invisible ou peu visible après assemblage.

Bien que seule une faible portion du renfort 1 soit représentée à la figure 1, le renfort s'étend sur toute la longueur de l'aube (qui est généralement comprise entre 0,5 et 1 mètre) et suit le profil de cette dernière. On rappelle qu'une telle aube peut être cambrée et vrillée, le renfort 1 devant se conformer au bord d'attaque ou de fuite de l'aube correspondante.

L'invention vise à augmenter les caractéristiques mécaniques de ce renfort 1.

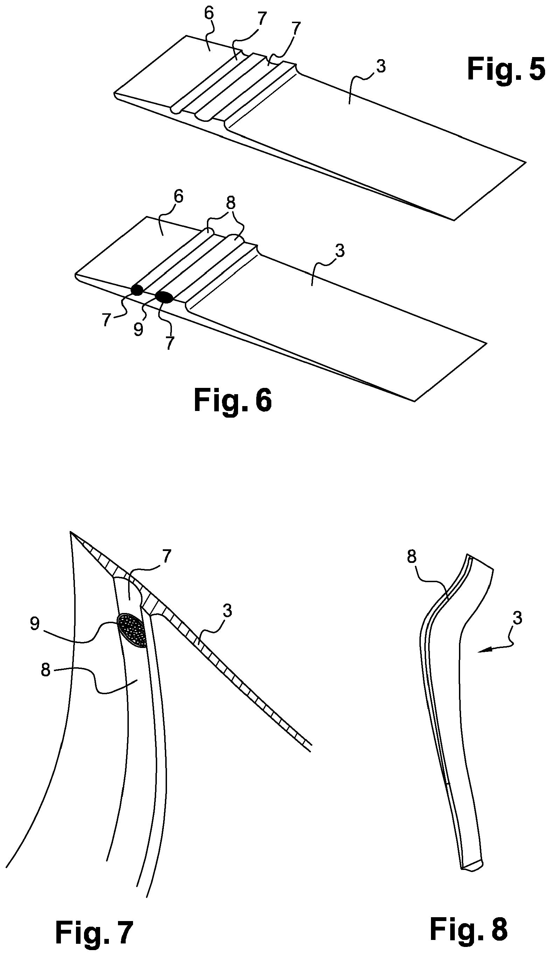

A cet effet, des évidements 7 sont réalisés, par exemple par usinage ou par matriçage, dans les surfaces de jonction 6 des tôles 2, 3, sur la majeure partie de la longueur des tôles 2, 3 (voir figures 5 à 7). Ces évidements 7 sont ménagés dans les zones destinées à former, après assemblage, la partie massive 4 du renfort 1.

Un ou plusieurs évidements 7 peuvent être réalisés dans chacune des surfaces de jonction des tôles 2, 3, les évidements 7 étant situés en regard les uns des autres après assemblage desdites tôles 2, 3.

Le renfort 1 comporte en outre une ou plusieurs gaines 8 à l'intérieur desquelles sont insérés un ou plusieurs faisceaux de fibres 9, l'ensemble étant conformé pour épouser la forme du ou des évidements 7 avant insertion dans le ou les évidements 7 de l'une 3 des tôles 2, 3.

Dans les figures 5 à 6, les portions représentées des tôles 2, 3 sont sensiblement planes. Ces tôles 2, 3 comportent toutefois des zones ou portions cambrées, comme celles représentées aux figures 7 et 8.

Le section de la gaine 8 peut par exemple être circulaire (figure 2) ou ovale (figure 3) et le diamètre interne de la gaine 8 est par exemple de l'ordre de 3 à 12 mm.

Les fibres 9, la gaine 8 et les évidements 7 s'étendent le long du renfort 1, sur une longueur comprise entre 0,5 et 1 m.

Les fibres 9 sont en céramique, par exemple en carbure de silicium (SiC), et sont revêtues d'un alliage à base de titane, par un procédé d'enduction connu notamment du document WO-A1-2010/136687.

La gaine 8 et les tôles 2, 3 sont également réalisées dans un alliage à base de titane. Ces éléments sont par exemple réalisés en TA6V, T40 ou TA3V2.5.

En variante, la gaine 8 est réalisée par tressage de fibres 10 de même nature que les fibres de renfort 9, ou d'une nature différente. Les fibres 10 servant au tressage de la gaine 8 sont par exemple en un alliage à base de titane ou en carbure de silicium.

La section du faisceau de fibres 9 est inférieure ou égale à 95 % de la section de la gaine 8, de façon à ce que le faisceau puisse être inséré facilement à l'intérieur de la gaine 8.

Une fois que la ou les gaines 8 sont placées dans le ou les évidements correspondants 7 de l'une 3 des tôles 2, 3, les fibres 9 étant maintenues en position dans les gaines 8, les deux tôles 2, 3 peuvent être assemblées l'une à l'autre par leurs surfaces de jonction 6. Les gaines 8 s'insèrent alors dans les évidements 7 de l'autre tôle 2. L'intégrité des fibres 9 est préservée par les gaines 8, qui les protègent et les maintiennent en position durant la phase d'assemblage.

Lors de cet assemblage, les deux tôles 2, 3 sont soudées l'une à l'autre par soudage par diffusion, l'assemblage pouvant également être réalisé par compression isostatique à chaud autour d'un noyau. Ces procédés sont connus de l'art antérieur et ne seront pas détaillés ici. En particulier, le document EP 1 574 270, au nom de la Demanderesse, décrit un procédé de réalisation d'un renfort comportant une étape de soudage par diffusion. Les demandes de brevet FR 10/51992 et FR 11/50532, déposées par la Demanderesse et non encore publiées, décrivent des procédés de réalisation de renforts comportant une étape de compression isostatique à chaud.

Lors du soudage par diffusion, le titane présent dans le revêtement des fibres 9, dans la ou les gaines 8 et dans les tôles 2, 3, diffuse d'un élément à un autre, de manière à ce que, après diffusion, le renfort 1 comporte une matrice métallique homogène dans laquelle sont insérées les fibres 9. Ceci confère au renfort 1 des propriétés mécaniques accrues d'environ 50 % par rapport aux propriétés mécaniques d'un renfort de l'art antérieur.

## Revendications

1. Procédé de renforcement d'un renfort métallique (1), destiné à être monté sur un bord d'attaque ou de fuite d'une aube composite de turbomachine, telle qu'une aube de soufflante d'un turboréacteur ou d'un turbopropulseur d'avion, et réalisé par assemblage de deux tôles (2, 3), **caractérisé en ce que** le renfort ayant une forme profilée et présentant, à l'avant, une partie massive (4) prolongée par deux lèvres (5) destinées à être appliquées et collées respectivement sur l'intrados et l'extrados d'une aube de soufflante en matériaux composite, chaque tôle (2, 3) comportant une surface de jonction (6), le procédé comportant les étapes consistant à :
- ménager au moins un évidement (7) dans chacune des surfaces de jonction (6) des deux tôles (2, 3) du renfort (1) de la pièce,
- insérer au moins partiellement des moyens de renfort (8, 9) de forme allongée dans ledit évidement (7), les moyens de renfort comportant au moins un faisceau de fibres (9) de renfort entouré d'une gaine (8) de maintien et de protection des fibres (9),
- assembler les deux tôles (2, 3), par soudage par diffusion, par leurs surfaces de jonction (6).

2. Procédé selon la revendication 1, **caractérisé en ce que** les fibres (9) de renfort sont en céramique, par exemple en carbure de silicium.

3. Procédé selon la revendication 1 ou 2, **caractérisé en ce que** la gaine (8) et les parties (2, 3) sont métalliques, par exemple en alliage à base de titane.

4. Procédé selon l'une des revendications 1 à 3, **caractérisé en ce que** les fibres (9) sont revêtues d'un matériau métallique, par exemple un alliage à base de titane.

5. Procédé selon l'ensemble des revendications 3 et 4, **caractérisé en ce que**, le revêtement des fibres (9), la gaine (8) et les deux parties (2, 3) étant réalisés dans un même matériau métallique, les deux parties (2, 3) sont assemblées par soudage par diffusion de manière à ce que, après diffusion, le renfort (1) comporte une matrice métallique homogène dans laquelle sont insérées les fibres (9) de renfort.

6. Procédé selon la revendication 1 ou 2, **caractérisé en ce que** la gaine (8) est réalisée par tressage de fibres (10).

7. Procédé selon l'une des revendications 1 à 6, **caractérisé en ce que**, avant insertion dans l'évidement (7) de l'une (3) des parties, les moyens de renfort (8, 9) sont conformés pour épouser la forme de cet évidement (7).

8. Procédé selon l'une des revendications 1 à 7, **caractérisé en ce que** la section du faisceau de fibres (9) est inférieure ou égale à 95 % de la section de la gaine (8).

9. Renfort métallique (1), destiné à être monté sur un bord d'attaque ou de fuite d'une aube composite de turbomachine, telle qu'une aube de soufflante d'un turboréacteur ou d'un turbopropulseur d'avion, et obtenu par exécution du procédé selon l'une des revendications 1 à 8, **caractérisé en ce qu'**il présente une forme profilée et présente, à l'avant, une partie massive (4) prolongée par deux lèvres (5) destinées à être appliquées et collées respectivement sur l'intrados et l'extrados d'une aube de soufflante en matériaux composite, chaque tôle (2, 3) comportant une surface de jonction (6), le renfort (1) comportant en outre des moyens de renfort (8, 9) disposés au coeur du renfort (1) dans des évidements des surfaces de jonction (6) des deux tôles (2, 3) du renfort (1), les moyens de renfort comportant au moins un faisceau de fibres (9) de renfort entouré d'une gaine (8) de maintien et de protection des fibres (9).

## Patentansprüche

1. Verfahren zur Verstärkung einer metallischen Verstärkung (1), die zum Montieren auf einer Vorderkante oder Hinterkante einer Verbundschaufel einer Turbomaschine bestimmt ist, wie z. B. einer Gebläseschaufel eins Flugzeug-Turboreaktors oder eines Flugzeug-Turboantriebs, und per Montage von zwei Blechen (2, 3) realisiert ist, **dadurch gekennzeichnet, dass** die Verstärkung eine profilierte Form hat, die vorne einen massiven Teil (4) aufweist, der durch zwei Lippen (5) verlängert ist, die dazu bestimmt sind, jeweils auf der inneren Wölbung und der äußeren Wölbung einer Gebläseschaufel aus Verbundmaterialien angewendet und verklebt zu sein, wobei jedes Blech (2, 3) eine Verbindungsfläche (6) umfasst, wobei das Verfahren die Schritte umfasst, bestehend aus:
- Aussparen wenigstens einer Ausnehmung (7) in jeder Verbindungsfläche (6) der zwei Bleche (2, 3) der Verstärkung (1) des Teils,
- wenigstens teilweises Einfügen der Verstärkungsmittel (8, 9) in länglicher Form in die genannte Ausnehmung (7), wobei die Verstärkungsmittel wenigstens ein Faserbündel (9) zur Verstärkung umfassen, das mit einer Ummantelung (8) zum Halten und Stützen der Fasern (9) umgeben ist,
- Montieren der zwei Bleche (2, 3) per Diffusionsschweißen durch ihre Verbindungsflächen (6).

2. Verfahren gemäß Anspruch 1, **dadurch gekennzeichnet, dass** die Fasern (9) zur Verstärkung aus Keramik, z. B. aus Siliziumkarbid, sind.

3. Verfahren gemäß Anspruch 1 oder 2, **dadurch gekennzeichnet, dass** die Ummantelung (8) und die Tele (2, 3) metallisch, z. B. aus einer Legierung auf Titanbasis, sind.

4. Verfahren gemäß einem der Ansprüche 1 bis 3, **dadurch gekennzeichnet, dass** die Fasern (9) mit einem metallischen Material, z. B. einer Legierung auf Titanbasis, beschichtet sind.

5. Verfahren gemäß allen Ansprüchen 3 und 4, **dadurch gekennzeichnet, dass** die Beschichtung der Fasern (9), die Ummantelung (8) und die zwei Teile (2, 3) in einem und demselben metallischen Material realisiert sind, die zwei Teile (2, 3) per Diffusionsschweißen derart montiert sind, dass die Verstärkung (1) nach der Diffusion eine homogene metallische Matrize umfasst, in der die Verstärkungsfasern (9) eingefügt sind.

6. Verfahren gemäß Anspruch 1 oder 2, **dadurch gekennzeichnet, dass** die Ummantelung (8) per Faserverflechtungen (10) realisiert ist.

7. Verfahren gemäß einem der Ansprüche 1 bis 6, **dadurch gekennzeichnet, dass** die Verstärkungsmittel (8, 9) vor dem Einfügen eines (3) der Teile in die Ausnehmung (7) angepasst werden, um die Form dieser Ausnehmung (7) anzunehmen.

8. Verfahren gemäß einem der Ansprüche 1 bis 7, **dadurch gekennzeichnet, dass** das Faserbündel (9) kleiner als oder gleich 95 % des Querschnitts der Ummantelung (8) ist.

9. Metallische Verstärkung (1), die dazu bestimmt ist, auf einer Vorderkante oder Hinterkante einer Verbundschaufel einer Turbomaschine, wie z. B. einer Flugzeug-Gebläseschaufel eines Turboreaktors oder eines Flugzeug-Turboantriebs montiert zu sein und per Ausführung eines Verfahrens gemäß einem der Ansprüche 1 bis 8 erhalten zu sein, **dadurch gekennzeichnet, dass** sie eine profilierte Form aufweist und vorne einen massiven Teil (4), der durch zwei Lippen (5) verlängert ist, die dazu bestimmt sind, jeweils auf einer inneren Wölbung und einer äußeren Wölbung einer Gebläseschaufel aus Verbundmaterial angewendet und verklebt zu sein, aufweist wobei jedes Blech (2, 3) eine Verbindungsfläche (6) umfasst, wobei die Verstärkung (1) darüber hinaus Verstärkungsmittel (8, 9) umfasst, die im Kern der Verstärkung (1) in Ausnehmungen der Verbindungsflächen (6) der zwei Bleche (2, 3) der Verstärkung (1) angeordnet sind, wobei die Verstärkungsmittel wenigstens ein Faserbündel (9) zur Verstärkung umfassen, das von einer Ummantelung (8) zum Halten und Schützen der Fasern (9) umgeben ist.

## Claims

1. A method for reinforcing a metallic reinforcement (1) intended to be mounted on a leading edge or a trailing edge of a composite turbomachine blade, such as a fan blade of a turbojet engine or a turboprop engine of an aircraft, and produced by assembling two metal sheets (2, 3), **characterized in that** the reinforcement has an airfoil shape and has, at the front, a solid portion (4) extended by two lips (5) intended to be applied and adhered to the frontside and the backside of a fan blade made of composite material, respectively, with each metal sheet (2, 3) comprising a connecting surface (6), with the method involving steps consisting in:
- providing at least one cavity (7) in each one of the connecting surfaces (6) of the two metal sheets (2, 3) of the part reinforcement (1),
- at least partially inserting reinforcing means (8, 9) having an elongate shape into said cavity (7), with the reinforcing means comprising at least one bundle (9) of reinforcing fibers (9) surrounded by a reinforcing sleeve (8) for holding and protecting the fibers (9),
- assembling the two metal sheets (2, 3), for example by diffusion bonding, at the connecting surfaces (6) thereof.

2. A method according to claim 1, **characterized in that** the reinforcing fibers (9) are made of ceramic, for example of silicon carbide.

3. A method according to claim 1 or 2, **characterized in that** the sheath (8) and the parts (2, 3) are made of metal, for example of a titanium-based alloy.

4. A method according to one of claims 1 to 3, **characterized in that** the fibers (9) are coated with a metallic material, for example a titanium-based alloy.

5. A method according to all of claims 3 and 4, **characterized in that** the coating of the fibers (9), the sleeve (8) and the two parts (2, 3) is made of the same metallic material, the two parts (2, 3) are assembled by diffusion bonding so that, after diffusion, the reinforcement (1) comprises a homogeneous metallic matrix into which the reinforcing fibers (9) are inserted.

6. A method according to claim 1 or 2, **characterized in that** the sleeve (8) is formed by braiding fibers (10).

7. A method according to one of claims 1 to 6, **characterized in that**, prior to insertion into the cavity (7) of one (3) of the parts, the reinforcing means (8, 9) are shaped so as to match the shape of said cavity (7).

8. A method according to one of claims 1 to 7, **characterized in that** the section of the bundle of fibers (9) is less than or equal to 95% of the sleeve (8) section.

9. A metallic reinforcement (1) for mounting on a leading edge or a trailing edge of a composite turbomachine blade, such as a fan blade of a turbojet engine or a turboprop engine of an aircraft, and produced by implementing the method according to one of claims 1 to 8, **characterized in that** it has an airfoil shape and has, at the front, a solid portion (4) extended by two lips (5) intended to be applied and adhered to the frontside and the backside of a fan blade made of composite material, respectively, with each metal sheet (2, 3) comprising a connecting surface (6), the reinforcement (1) further comprising reinforcing means (8, 9) positioned at the core of the reinforcement (1) in cavities of the connecting surfaces (6) of the two metal sheets (2, 3) of the reinforcement (1), with the reinforcing means comprising at least one bundle of reinforcing fibers (9) surrounded by a reinforcing sleeve (8) for holding and protecting the fibers (9).
